# EUROPEAN PATENT SPECIFICATION

(11) **EP 3 435 523 B1**
(45) Date of publication and mention of the grant of the patent: **17.03.2021**
(21) Application number: 18185538.8
(22) Date of filing: 25.07.2018
(51) Int. Cl.: H02K 1/28, H02K 1/27

(54) **MAGNET STRUCTURE AND MOTOR**
MAGNETSTRUKTUR UND MOTOR
STRUCTURE D'AIMANT ET MOTEUR

(30) Priority: 26.07.2017 JP 2017144601
(43) Date of publication of application: 30.01.2019
(73) Proprietor: TDK Corporation, Tokyo 108-0023 (JP)
(72) Inventor: SHIBAHARA, Shoichi, Tokyo, 108-0023 (JP); KOJIMA, Nobuo, Tokyo, 108-0023 (JP); KAWASHIMA, Shinya, Tokyo, 108-0023 (JP)
(74) Representative: Grünecker Patent- und Rechtsanwälte PartG mbB

(56) References cited:
- EP-A1- 2 555 382
- EP-A1- 2 584 670
- WO-A1-2009/068736
- DE-U1-202012 101 231

## Description

### CROSS-REFERENCE TO RELATED APPLICATIONS

This application is based upon and claims the benefit of priority from Japanese Patent Application No. 2017-144601, filed on 26 July, 2017, the entire content of which is incorporated herein by reference.

### TECHNICAL FIELD

The present disclosure relates to a magnet structure and a motor using the same.

### BACKGROUND

A conventional magnet structure includes a baseplate and a plurality of permanent magnets disposed on the baseplate (Japanese Unexamined Patent Publication No. 2001-119878, United States Patent No. 7768169, United States Patent No. 8058763, and United States Patent Application Publication No. 2010/0194226). The magnet structure can be incorporated into a motor. A magnet structure according to the preamble of claim 1 is disclosed in EP 2 555 382A1

### SUMMARY

However, the magnets of the conventional magnet structure are bonded in a state in which the magnets are exposed at the surface of a rotor, and thus there are problems such as falling of the magnets due to a centrifugal force caused by rotation of the motor, corrosion of the magnets, and the like. Since a magnet structure with a cover has a single structure in which the cover covers all the magnets, eddy currents are not sufficiently reduced. The present disclosure was made in view of the above circumstances, and is directed to providing a magnet structure capable of reliably fixing permanent magnets to a motor while reducing eddy currents, and a motor using the same.

The invention is defined in claim 1. To resolve the above problem, a magnet structure according to to the invention includes: a plurality of permanent magnets fixed onto a baseplate; and a cover structure for covering the plurality of permanent magnets. The cover structure is made up of a plurality of covers that is formed of a non-magnetic material and covers the plurality of permanent magnets. A relative position between the plurality of covers is fixed, and there is a gap between the neighboring covers. As the covers are present, corrosion or falling of the permanent magnets is suppressed. As the covers are divided by the gap between the covers, eddy currents can be reduced at the covers to increase output of a motor. Due to this gap, deformation associated with a cooling effect and thermal expansion can be suppressed.

Preferably there is a gap between the permanent magnets. When the baseplate (e.g., iron) is expanded or contracted by heat, the gap between the permanent magnets can absorb stress applied to the permanent magnets. Therefore, fracturing and cracking of the permanent magnet can be suppressed. Further, there is an effect that the permanent magnets are not easily removed from the baseplate.

Preferably the baseplate is a magnetic material. If the baseplate is the magnetic material, magnetic lines of force generated from the permanent magnets can pass through the baseplate, and thus an effect of a magnetic force can be improved.

In a magnet structure according to the invention the number of covers is smaller than the number of permanent magnets. In this case, the number of components for fixing the covers may be small, and productivity is improved. Especially when the permanent magnets are fixed to the baseplate, strength of the baseplate is important. As the number of components for fixture becomes small, a structure of the baseplate is not complicated, and thus the strength of the baseplate is increased. Since the number of covers is small, a degree to which the gap between the permanent magnets is covered by the cover becomes high, and the gap between the permanent magnets is less easily exposed. Therefore, water or dust becomes less likely to enter the gap, and an anticorrosive effect and an antirust effect are expected at the gap portion between the permanent magnets. Protection of the gap portion between the permanent magnets due to the cover is enhanced, and thereby the fracturing and cracking of the permanent magnet can be prevented.

When there is the least common multiple of a least unit obtained by dividing a length of the magnet structure in a Z-axis direction by the number of covers and a least unit obtained by dividing the length of the magnet structure by the number of permanent magnets, there is a possibility of the gap between the permanent magnets being exposed at that position. In this case, a protective function of the gap is reduced, but a position of the gap is confirmed. Thereby, it can be confirmed whether or not mounting positions of the covers are as specified. Further, joint surfaces of the permanent magnets are covered, and thereby the appearance is maintained, and there is an effect of improving a quality of appearance. The numbers of covers and permanent magnets, and lengths of the covers and the permanent magnets in the Z-axis direction or widths of the gaps thereof arc appropriately adjusted, and thereby the gap between the permanent magnets can also be located at a position at which it is exposed from the gap between the covers.

Preferably surfaces of the permanent magnets are covered with a resin. Thereby, the magnet surfaces are cut off from open air, and corrosion or deterioration of the permanent magnets can be prevented. Further, when the resin is a bond, the covers and the permanent magnets are fixed, and the strength of the magnet structure can be increased.

Preferably lateral surfaces of the baseplate have grooves extending in longitudinal directions thereof, and each of the covers includes bent parts fitted into the grooves. The bent parts are fitted into the grooves, and thereby the covers can be prevented from being disengaged from the baseplate. When the bent parts of the covers are structured to be put close to each other, the grooves of the baseplate and the bent parts of the covers can be tightly fastened. Thereby, since holes into which components (screws) for fixing the covers to the baseplate are inserted can be omitted, the strength of the baseplate can be increased. When this structure is combined with the bond, fixing strength can be further increased.

Preferably holes for inserting fixing components, such as screws (male screws) or bolts, for fixing the covers are not provided in lateral surfaces of the baseplate.

Because the holes are not provided, the strength of the baseplate can be kept high.

Preferably lateral surfaces of the covers have protrusions that protrude in a longitudinal direction of the baseplate. As the protrusions come into contact with the neighboring covers, movement of the covers in the longitudinal direction can be regulated, and the gap between the covers can be secured. Thereby, the eddy currents can be reduced. The protrusions are preferably located at portions at which the protrusions cover the baseplate rather than portions at which the protrusions cover the permanent magnets, and are structured not to overlap upper surfaces and lateral surfaces of the permanent magnets. Thereby, the eddy currents can be effectively reduced.

Preferably lateral surfaces of the grooves of the baseplate which are close to the permanent magnet are inclined with respect to a surface of the baseplate to which the permanent magnets are fixed. The bent parts of each cover are fitted to shapes of the grooves, and thereby the covers can be prevented from being disengaged in a direction of the surface to which the permanent magnets are fixed. A width of the groove can be widened in a depth direction. In addition, a longitudinal section of the groove can be formed in a wedge shape. As described above, the magnet structure can improve various qualities.

A motor having a plurality of magnet structures, each of which is described above, is configured such that the plurality of magnet structures is disposed along a surface of a rotor, and the motor includes coils disposed within a range of a magnetic field of the plurality of magnet structures. Polarities of surfaces of the magnet structures are alternately inverted in a circumferential direction of the surface of the rotor. Each magnet structure itself can also be used for a motor that performs linear driving in addition to the aforementioned rotary type motor.

According to the present disclosure, a magnet structure capable of reliably fixing permanent magnets to a motor while reducing eddy currents, and a motor using the same can be provided.

### BRIEF DESCRIPTION OF THE DRAWINGS

FIG. 1 is a partially exploded perspective view of a magnet structure.
FIG. 2A is a view illustrating a longitudinal section of a magnet structure (a first embodiment) from the front, FIG 2B is a side view thereof, and FIG. 2C is a top view thereof.
FIG. 3 is a view illustrating a longitudinal section of the magnet structure from the front.
FIG. 4 is a front view of a rotor of a rotary motor having a plurality of magnet structures.
FIG. 5 is a view illustrating a sectional configuration perpendicular to a rotational axis of the motor.
FIG. 6 is a view illustrating an area surrounded with a quadrilateral dotted line in FIG 5.
FIG. 7 is a block diagram of an electric generation system using the motor.
FIG. 8 is a view illustrating a sectional configuration perpendicular to a rotational axis of a motor having another structure.
FIG. 9A is a view illustrating a longitudinal section of a magnet structure (a second embodiment) from the front, FIG. 9B is a side view thereof, and FIG 9C is a top view thereof.
FIG. 10A is a view illustrating a longitudinal section of a magnet structure (a third embodiment) from the front, FIG 10B is a side view thereof, and FIG. 10C is a top view thereof.
FIG. 11A is a view illustrating a longitudinal section of a magnet structure (a fourth embodiment) from the front, FIG. 11B is a side view thereof, and FIG 11C is a top view thereof.
FIG. 12 is a view illustrating a longitudinal section of the magnet structure from the front.
FIG. 13 is a view illustrating a longitudinal section of the magnet structure from the front.
FIG. 14 is a view illustrating a longitudinal sectional configuration of the magnet structure and covers from the side.
FIG. 15 is a partial perspective view of the cover illustrating flows of electric currents.
FIG. 16 is a partial perspective view of the cover illustrating flows of electric currents.
FIG. 17 is a partial perspective view of the cover illustrating flows of electric currents.
FIG. 18 is a partial perspective view of the cover illustrating flows of electric currents.
FIG. 19 is a partial perspective view of the cover illustrating flows of clectric currents.

### DETAILED DESCRIPTION

Hereinafter, a magnet structure according to an embodiment and a motor using the same will be described. The same elements will be given the same reference signs, and duplicate description thereof will be omitted.

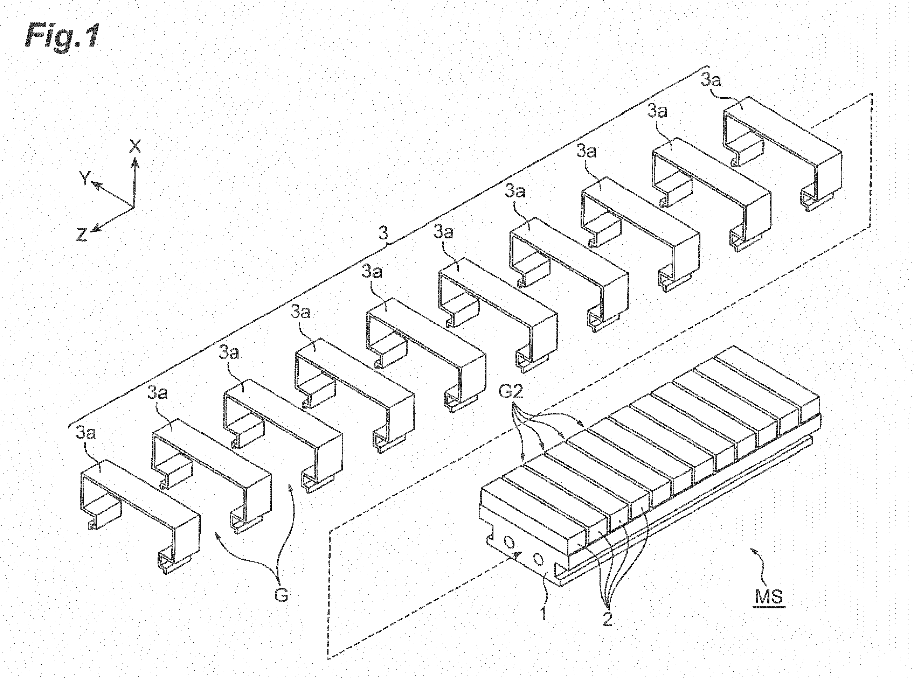

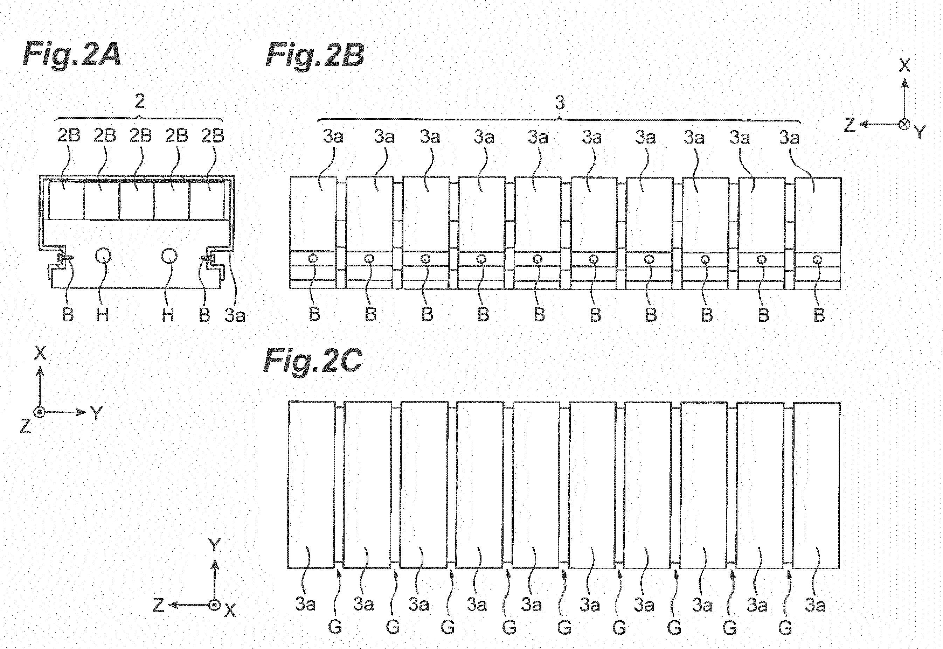

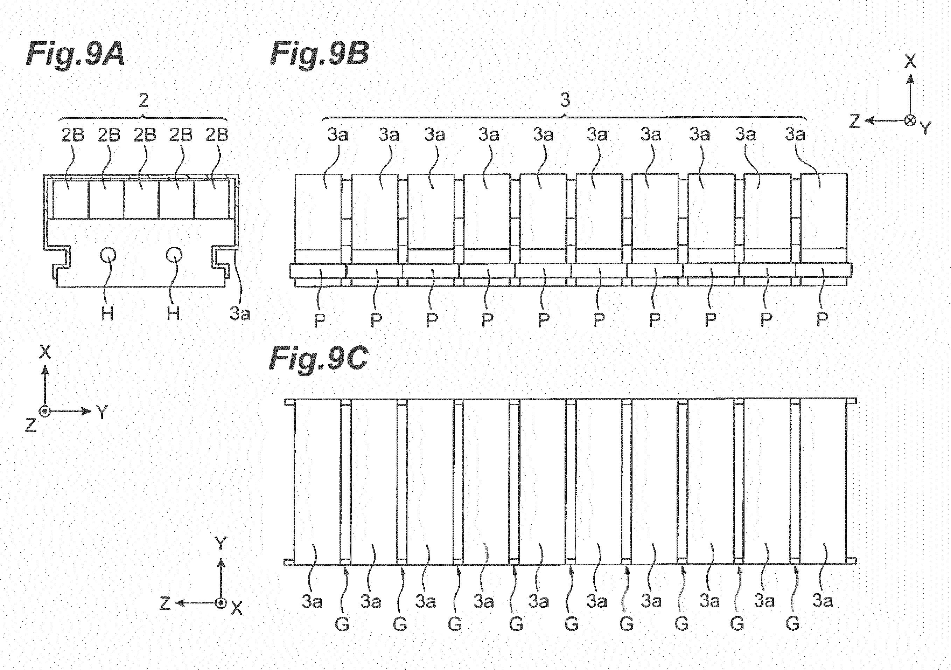

FIG 1 is a partially exploded perspective view of a magnet structure. FIG. 2A is a view illustrating a longitudinal section of a magnet structure (a first embodiment) from the front, FIG. 9B is a side view thereof, and FIG. 2C is a top view thereof.

A magnet structure MS includes a plurality of permanent magnets 2 that is aligned and fixed on a baseplate 1, and a cover structure 3 for covering the plurality of permanent magnets 2. The cover structure 3 includes a plurality of covers 3a that is formed of a non-magnetic material and covers the plurality of permanent magnets 2. A relative position between the plurality of covers 3a is fixed, and there is a gap G between the neighboring covers 3a. A gas (air) is interposed in the gap G. In this figure, a longitudinal direction of the magnet structure MS is defined as a Z-axis direction, a width direction of the magnet structure MS, that is, a longitudinal direction of one permanent magnet 2 (one permanent magnet bar), is defined as a Y-axis direction, and a direction perpendicular to both of them is defined as an X-axis direction. The X-axis direction is identical to a thickness direction of the baseplate 1.

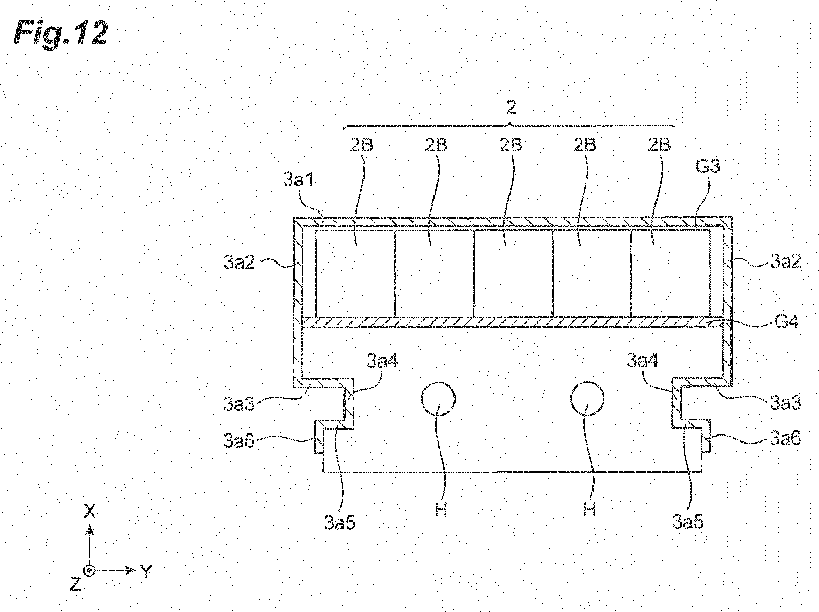

In FIG. 1, 12 permanent magnets 2 (12 permanent magnet bars) and 10 covers 3a are illustrated. After the permanent magnets 2 are fixed onto the baseplate 1, the covers 3a slide in the Z-axis direction and cover the permanent magnets 2.

Due to the presence of the covers 3a, corrosion, falling, etc. of the permanent magnets 2 are suppressed. Meanwhile, because the gap G is between the covers 3a, eddy currents occurring at the covers 3a can be reduced, and efficiency of a motor is increased. Due to the gap, deformation associated with thermal expansion can also be suppressed. Especially, upper surface sides of the covers 3a are preferably open in view of suppression of the occurrence of the eddy currents, and heat dissipation.

There is also a gap G2 between the permanent magnets 2 (the permanent magnet bars). A gas (air) is interposed in the gap G2. In a case in which the baseplate 1 (for instance, iron) is expanded and contracted by heat, the gap G2 between the permanent magnets 2 can absorb stress applied to the permanent magnets 2. Therefore, the permanent magnets 2 are not easily removed from the baseplate 1. The permanent magnets 2 are fixed to the baseplate 1 by a bond.

The baseplate 1 may be a magnetic material. A laminated steel sheet (iron), a silicon steel sheet, or an iron sheet can be used as the magnetic material for the baseplate 1. A material such as stainless steel, aluminum, or carbon fiber can also be used as a non-magnetic material. If the baseplate 1 is the magnetic material, magnetic lines of force generated from the permanent magnets 2 can pass through the baseplate 1, and thus magnetic properties can be enhanced.

The number of covers 3a may be smaller than the number of permanent magnets 2 (permanent magnet bars). In this case, the number of components for fixing the covers may be small, and productivity is improved. Especially when the permanent magnets 2 are fixed to the baseplate 1, strength of the baseplate 1 is important. As the number of components for fixture becomes few, the baseplate is neither reduced in volume nor becomes a complicated shape. Thus, the strength of the baseplate 1 is increased.

Here, the number of covers 3a and the number of permanent magnets 2 will be described.

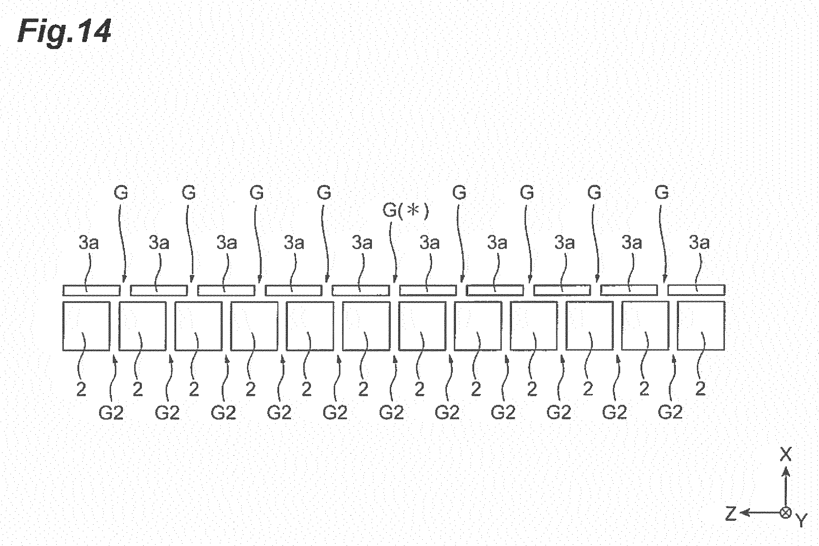

FIG. 14 is a view illustrating a longitudinal sectional configuration of the magnet structure and the covers from the side. The twelve permanent magnets 2 are arranged in a longitudinal direction. Since the number of covers 3a is smaller than the number of permanent magnets 2, a degree to which the gap G2 between the permanent magnets 2 is covered by the covers 3a becomes high, and the gap G2 is not easily exposed directly. Therefore, water or dust becomes less likely to enter the gap G2, and an anticorrosive effect and an antirust effect are expected at a portion that is in contact with the gap G2. In addition, protection of the gap position between the permanent magnets 2 due to the cover 3a is enhanced, and thereby fracturing and cracking of the permanent magnet 2 are reduced. When there is the least common multiple of a least unit obtained by dividing a length of the magnet structure in the Z-axis direction by the number of covers 3a and a least unit obtained by dividing the length of the magnet structure by the number of permanent magnets 2, there is a possibility of the gap G2 being exposed at that position (a position where G=G(*) in FIG 14). In this case, a protective function of the gap G2 is reduced, but the exposure of the gap G2(G(*)) is confirmed. Thereby, it can be confirmed whether or not mounting positions of the covers are as specified. In addition, the numbers of covers and permanent magnets, and the lengths of the covers and the permanent magnets in the Z-axis direction or widths of the gaps thereof are appropriately adjusted, and thereby the gap between the permanent magnets can also be located at a position at which it is exposed from the gap between the covers.

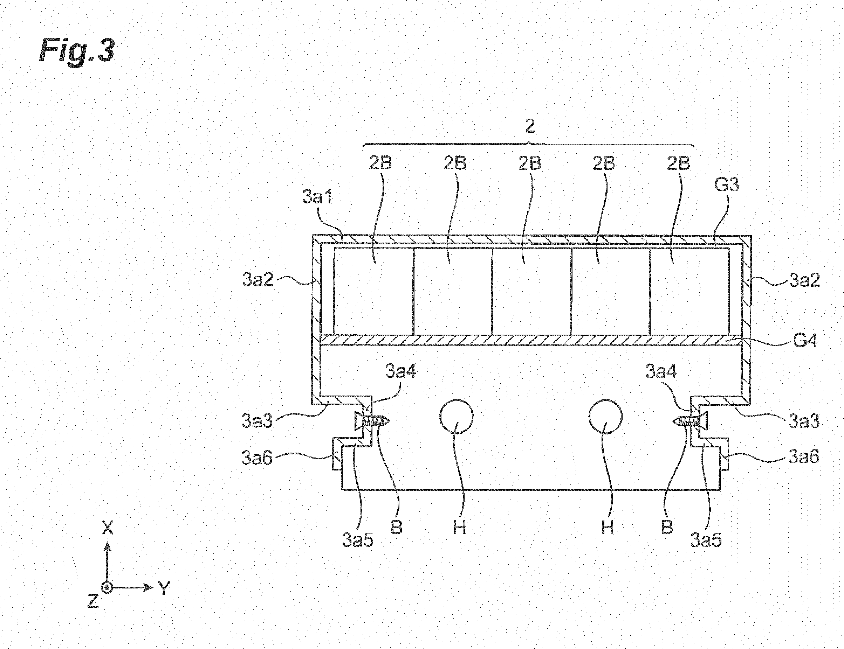

FIG. 3 is a view illustrating a longitudinal section of the magnet structure from the front.

Reference signs 3a1 to 3a6 denote parts of the cover 3a. There is a gap G3 between the cover 3a and the permanent magnet 2. A bond can be applied to the gap G3, and can fix the cover 3a and the permanent magnet 2. The bond is a resin, coats the permanent magnet 2, is not in contact with the cover 3a, and also enables a mode without a bonding function between the permanent magnet 2 and the cover 3a. In any case, a surface of the permanent magnet is covered with a resin. Thereby, the magnet surface is cut off from open air, and corrosion and deterioration of the permanent magnet can be prevented. Further, when the resin is a bond, the cover and the permanent magnet are fixed, and strength of the magnet structure can be increased.

In this case, fixing components (screws B) for fixing the cover 3a to the baseplate 1 can be omitted, and the strength of the baseplate 1 can be increased. In the case of the structure of FIG. 3, the baseplate 1 has threaded holes, and the screws B (or bolts) pass through holes of lower bent parts of the cover 3a and the threaded holes of the baseplate 1, and fix the cover 3a to the baseplate 1. A bond G4 is interposed in a gap between the permanent magnet 2 and the baseplate 1, and firmly fixes them. The screws B are male screws, and the threaded holes have female threads. The bolt is a type of male screw. A method of preparing a pin without threaded grooves instead of the male screw, preparing a non-threaded hole instead of the threaded hole, inserting the pin into the hole, and then fixedly welding the pin to the baseplate 1 is also conceivable. The fixing component such as the screw, the bolt, or the pin is inserted into the hole of the baseplate 1, and thereby the cover 3a can be fixed to the baseplate 1. The cover 3a can be fixed in contact with the permanent magnet 2 without providing the gap G3.

The permanent magnet 2 is formed into a bar shape by disposing a plurality of permanent magnet blocks 2B along a Y axis with no gap. The permanent magnet blocks 2B are fixed onto the baseplate 1 by the bond G4.

When viewed from the front, the baseplate 1 has two holes H. A jig for transportation of the magnet structure can be inserted into the holes H.

The cover 3a includes a top part 3a1, lateral parts 3a2, and bent parts 3a3 to 3a6. The top part 3al is a plate parallel to an YZ plane, and the lateral parts 3a2 are plates parallel to an XZ plane. An upper bent part 3a3 constituting each bent part is a plate parallel to the YZ plane, and an intermediate bent part 3a4 constituting each bent part is a plate parallel to the XZ plane. A lower bent part 3a5 constituting each bent part is a plate parallel to the YZ plane. A skirt bent part 3a6 constituting each bent part is a plate parallel to the XZ plane.

The bent parts of the cover 3a are fitted into grooves of the baseplate 1, and the grooves extend in the Z-axis direction. A width of the groove (in the X-axis direction) is constant in a depth direction, but the width can be changed to be able to prevent the bent part from coming out of the groove. In this way, lateral surfaces of the baseplate 1 are provided with the grooves extending in longitudinal directions thereof, and each cover 3a includes the bent parts fitted into the grooves. The bent parts are fitted into the grooves, and thereby the cover 3a can be fixed to the baseplate. In this case, the components (the screws) for fixing the cover 3a to the baseplate 1 can be omitted, and the strength of the baseplate 1 can be increased. When this structure is combined with the bond, fixing strength can be further increased.

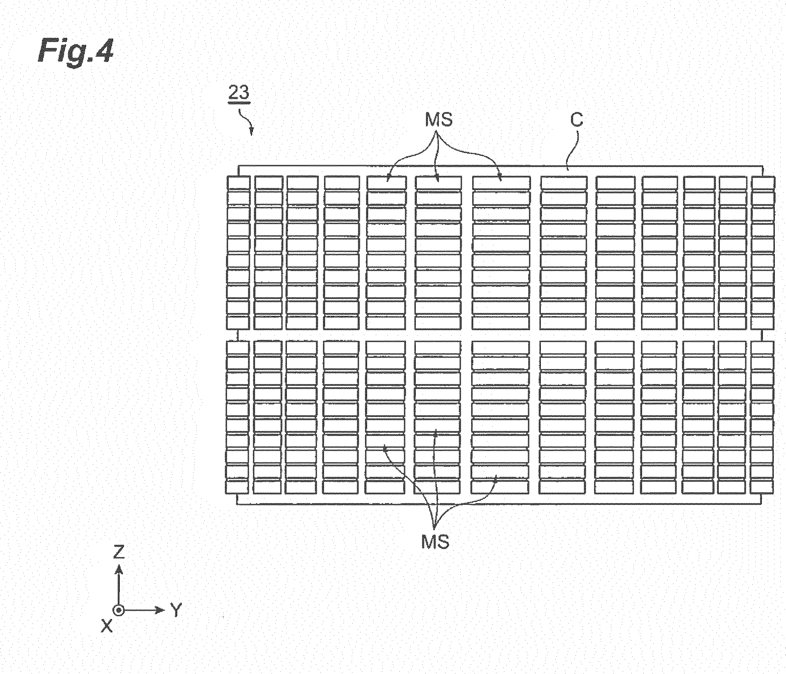

FIG. 4 is a front view of a rotor of a motor having a plurality of magnet structures.

The magnet structures MS are fixed to a cylindrical rotor C such that the longitudinal directions thereof are parallel to the Z axis that is a rotational axis. For example, the number of the magnet structures MS arranged in a circumferential direction is 128. In the same figure, two-tier magnet structures MS are disposed in an axial direction, and a total of 256 magnet structures MS are used.

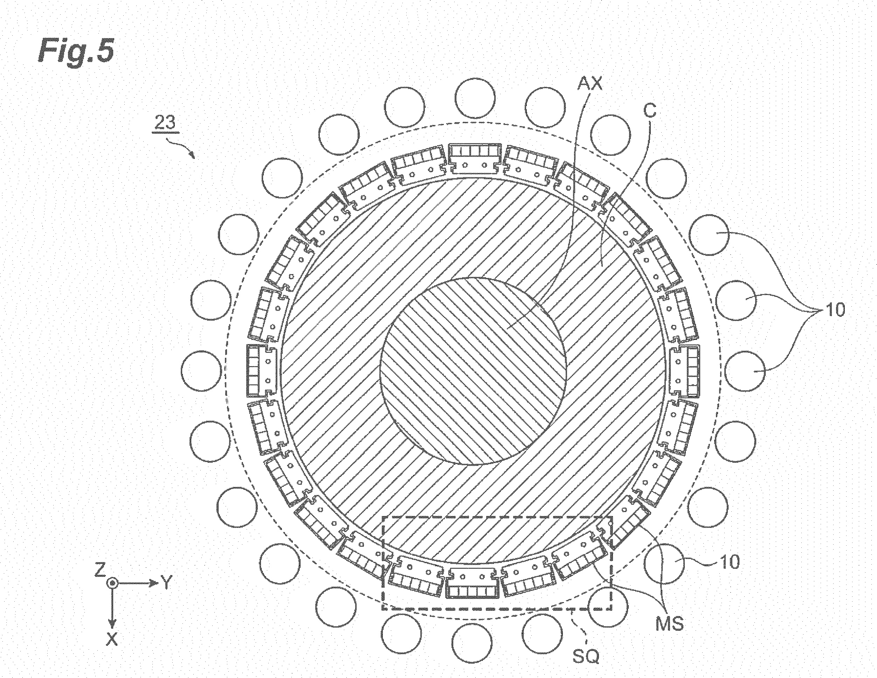

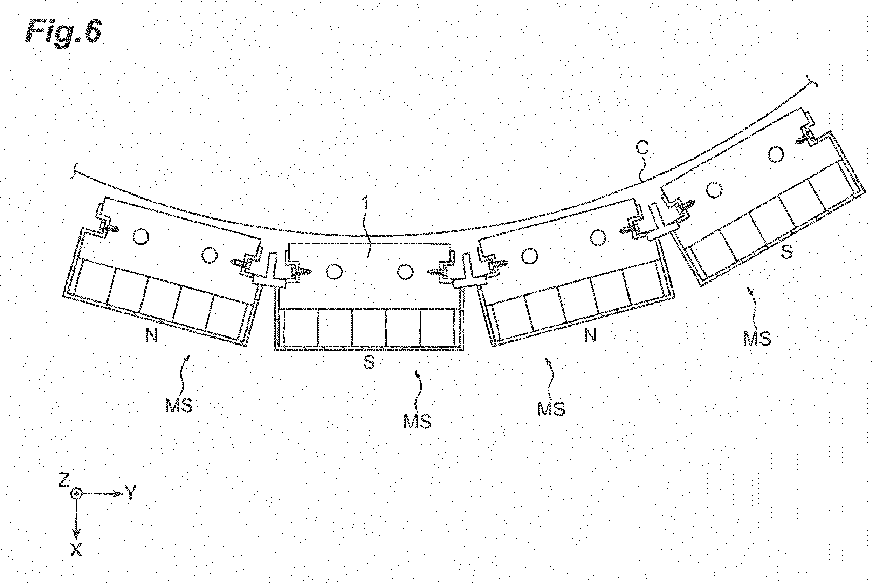

FIG. 5 is a view illustrating a sectional configuration perpendicular to a rotational axis of the motor. FIG. 6 is a view illustrating an area surrounded with a quadrilateral dotted line in FIG. 5.

In the motor, the rotor C is fixed around a shaft AX, and the plurality of magnet structures MS is disposed along a surface of the rotor C. The motor includes coils 10 that are disposed within a range of a magnetic field of the plurality of magnet structures MS. Polarities of surfaces of the magnet structures MS are alternately inverted in the circumferential direction of the rotor C. The magnet structure itself can also be used for a motor that performs linear driving.

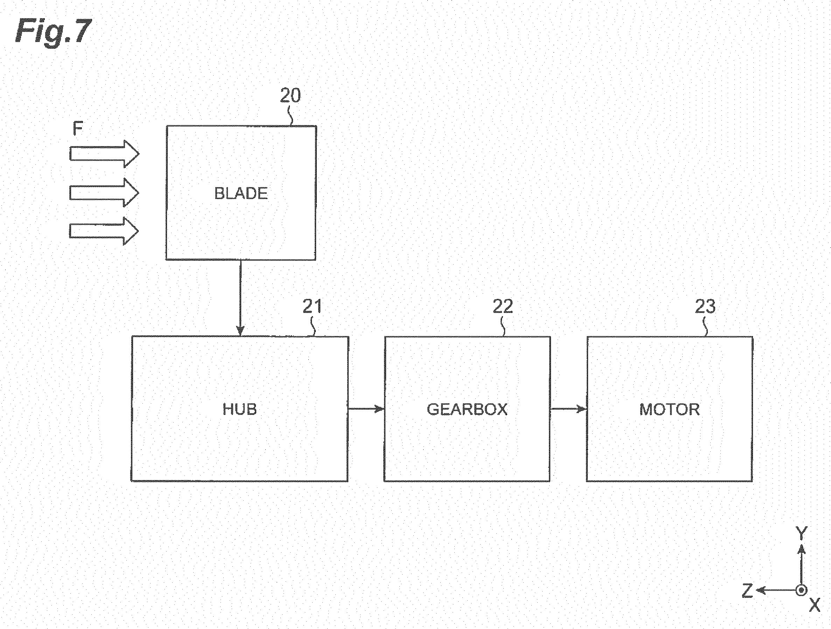

FIG. 7 is a block diagram of an electric generation system using the motor.

To be specific, an example applied to a wind turbine generator will be described. The wind turbine generator includes a plurality of blades 20, which receive a fluid F (wind) and rotate about a hub 21. Rotation of the hub 21 is amplified by a gearbox 22 (a speed increaser), and rotates the shaft AX of the aforementioned motor 23. The blades can constitute a turbine, and the fluid F may be a liquid.

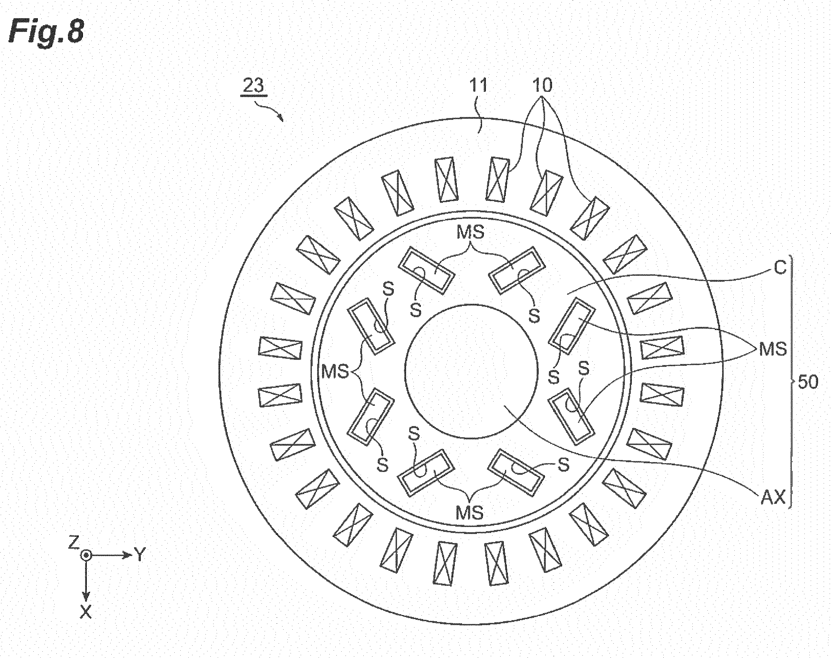

FIG. 8 is a view illustrating a sectional configuration perpendicular to a rotational axis of a motor having another structure.

The magnet structures MS are each made up of a plurality of rectangular parallelepiped permanent magnets stacked in a depth direction of each slot S of the rotor C.

The permanent magnet is formed of a rare earth sintered magnet, and is preferably, for example, an R-T-B sintered magnet. The R-T-B sintered magnet has particles (crystal grains) and grain boundaries composed of R₂T₁₄B crystals.

R in the R-T-B sintered magnet represents at least one rare earth element. The rare earth elements are Sc, Y, and lanthanoid elements that belong to group III in the long-period type periodic table. The lanthanoid elements include, for example, La, Ce, Pr, Nd, Sm, Eu, Gd, Tb, Dy, Ho, Er, Tm, Yb, and Lu. T in the R-T-B sintered magnet represents Fe, or Fe and Co. Further, T in the R-T-B sintered magnet may contain one or more selected from other transition metal elements. B in the R-T-B sintered magnet represents boron (B), or boron (B) and carbon (C).

The R-T-B sintered magnet according to the present embodiment may contain Cu or Al. Due to the addition of these elements, higher coercive force, higher corrosion resistance, or an improvement in a temperature characteristic is made possible.

Further, the R-T-B sintered magnet according to the present embodiment may contain Dy, Tb, or both of them as a heavy rare earth element. The heavy rare earth element may be contained in a crystal grain and a grain boundary. When the heavy rare earth element is not substantially contained in the crystal grain, it is preferably contained in the grain boundary. The heavy rare earth element in the grain boundary preferably has a higher concentration than that in the crystal grain. The R-T-B sintered magnet according to the present embodiment may be an R-T-B sintered magnet in which the heavy rare earth element is subjected to grain boundary diffusion. The R-T-B sintered magnet in which the heavy rare earth element is subjected to grain boundary diffusion can improve a residual magnetic flux density and a coercive force with a smaller amount of the heavy rare earth element, compared to an R-T-B sintered magnet in which the heavy rare earth element is not subjected to grain boundary diffusion.

Every permanent magnet is designed to have the same dimensions. For example, a length of a long side ranges from 3 to 70 mm, a length of a short side ranges from 3 to 30 mm, and a height ranges from 3 to 70 mm. As an example, every permanent magnet has a long side length of 21 mm, a short side length of 4 mm, and a height of 6 mm. If necessary, predetermined polishing (for example, barrel polishing) may be performed to chamfer the permanent magnet. All the permanent magnets are magnetized in the same direction, and are magnetized in a direction parallel to a short-side direction.

FIG. 9A is a view illustrating a longitudinal section of a magnet structure (a second embodiment) from the front, FIG. 9B is a side view thereof, and FIG. 9C is a top view thereof.

In a second embodiment, the screws B and threaded holes are removed from the first embodiment, and moreover, shapes of the covers 3a are changed. The other configurations and applications are as described above. That is, the threaded holes for fixing the covers 3a may not be provided in the lateral surfaces of the baseplate 1. The screws are omitted so that the strength of the baseplate 1 can be kept high.

The lateral surfaces of each cover 3a have protrusions P that protrude in the longitudinal direction (the Z-axis direction) of the baseplate 1. Each protrusion P comes into contact with the neighboring covers 3a so that movement of the covers 3a in the longitudinal direction can be regulated and a gap between the covers 3a can be secured. Thereby, eddy currents can be reduced. It is illustrated in FIGS. 9A, 9B and 9C that the portions of the skirt bent parts 3a6 of the covers 3a in FIG. 3 extend in the Z-axis direction. The sectional configuration in which the screws and threaded holes are removed from FIG. 3 is illustrated in FIG. 12.

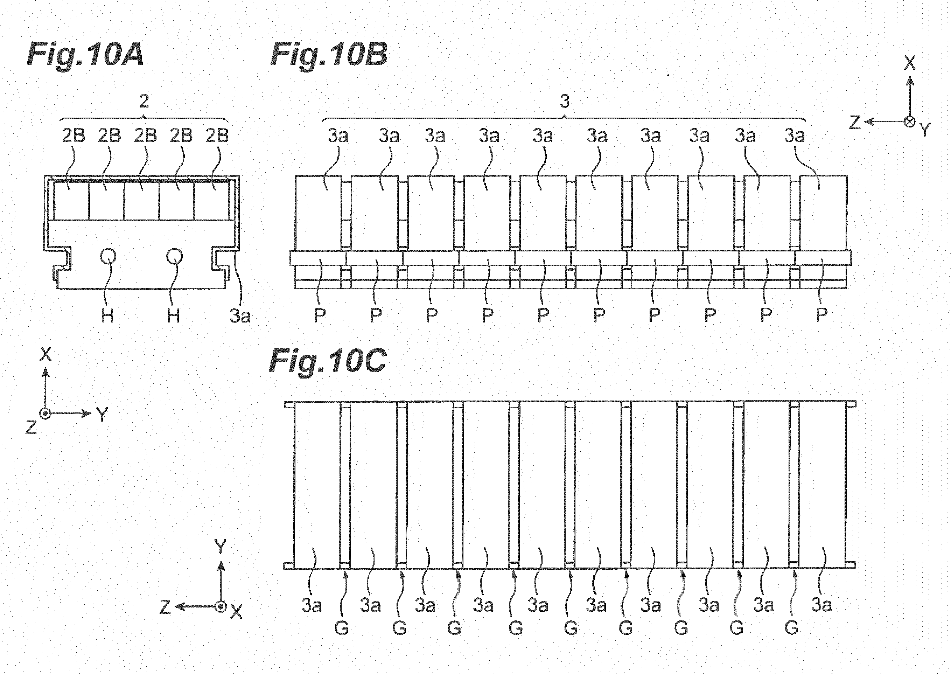

FIG. 10A is a view illustrating a longitudinal section of a magnet structure (a third embodiment) from the front, FIG 10B is a side view thereof, and FIG. 10C is a top view thereof.

When a third embodiment is compared with the second embodiment, only shapes of the lateral surfaces of each cover 3a are different, and the other configurations and applications are as described above. The covers 3a have protrusions P that protrude in the longitudinal direction (the Z-axis direction) of the baseplate 1. Each protrusion P comes into contact with the neighboring covers 3a, so that movement of the covers 3a in the longitudinal direction can be regulated, and a gap between the covers 3a can be secured. Thereby, eddy currents can be reduced. It is illustrated in FIGS. 10A, 10B and 10C that the portions of the intermediate bent parts 3a4 of each cover 3a in FIG. 3 extend in the Z-axis direction. Like the second embodiment, the sectional configuration in which the screws and threaded holes are removed from FIG. 3 is illustrated in FIG. 12.

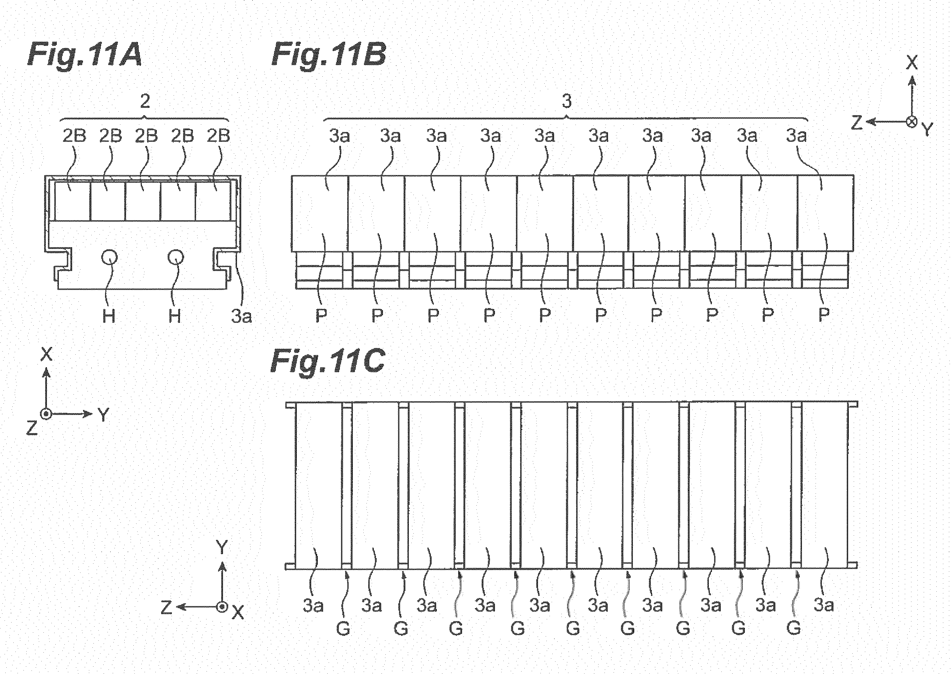

FIG. 11A is a view illustrating a longitudinal section of a magnet structure (a fourth embodiment) from the front, FIG. 11B is a side view thereof, and FIG. 11C is a top view thereof.

When a fourth embodiment is compared with the second embodiment, only shapes of the lateral surfaces of each cover 3a are different, and the other configurations and applications are as described above. The covers 3a have protrusions P that protrude in the longitudinal direction (the Z-axis direction) of the baseplate 1. Each protrusion P comes into contact with the neighboring covers 3a, so that movement of the covers 3a in the longitudinal direction can be regulated, and a gap between the covers 3a can be secured. Thereby, eddy currents can be reduced. It is illustrated in FIGS. 11A, 11B and 11C that the portions of the lateral parts 3a2 of each cover 3a in FIG 3 extend in the Z-axis direction. Like the second and third embodiments, the sectional configuration in which the screws and threaded holes are removed from FIG 3 is illustrated in FIG 12.

In any of the aforementioned configurations, shapes of the bent parts of each cover 3a can be variously deformed.

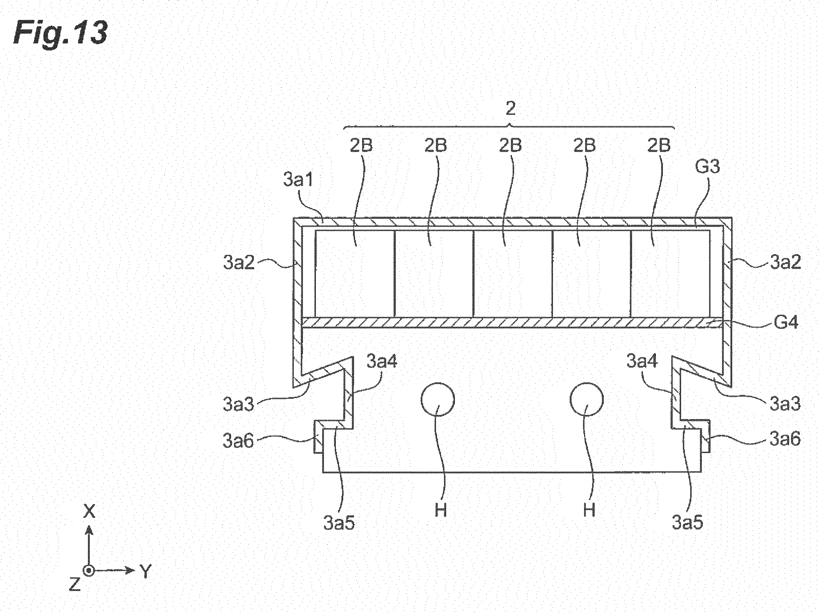

FIG. 13 is a view illustrating a longitudinal section of the magnet structure from the front, and illustrates an example in which the shapes of the bent parts of each cover 3a are deformed. In FIG. 13, a shape of the upper bent part 3a3 constituting each bent part is different from that of FIG. 12 (FIG. 3). As the upper bent part 3a3 proceeds in a depth direction, a width (a length in the X-axis direction) is increased, and each bent part has a wedge shape. Each groove of the baseplate 1 has the same shape as each bent part.

That is, in the magnet structure, a width of the groove of the baseplate 1 includes a first width (a width in the X-axis direction) at a shallow position in a depth direction of the groove, and a second width (a width in the X-axis direction) at a deep position in the depth direction of the groove. The first width is smaller than the second width. In other words, a lateral surface (the upper bent part 3a3) of the groove of the baseplate 1 which is close to the permanent magnet 2 is inclined with respect to a surface of the baseplate 1 (a surface of the bond G4) to which the permanent magnet 2 is fixed. In this case, the second width located at the deep position is wide, and the first width located at the shallow position is narrow. Thus, when the aforementioned bent part is fitted into the groove, it does not easily come out. A longitudinal section of the groove may take a wedge form.

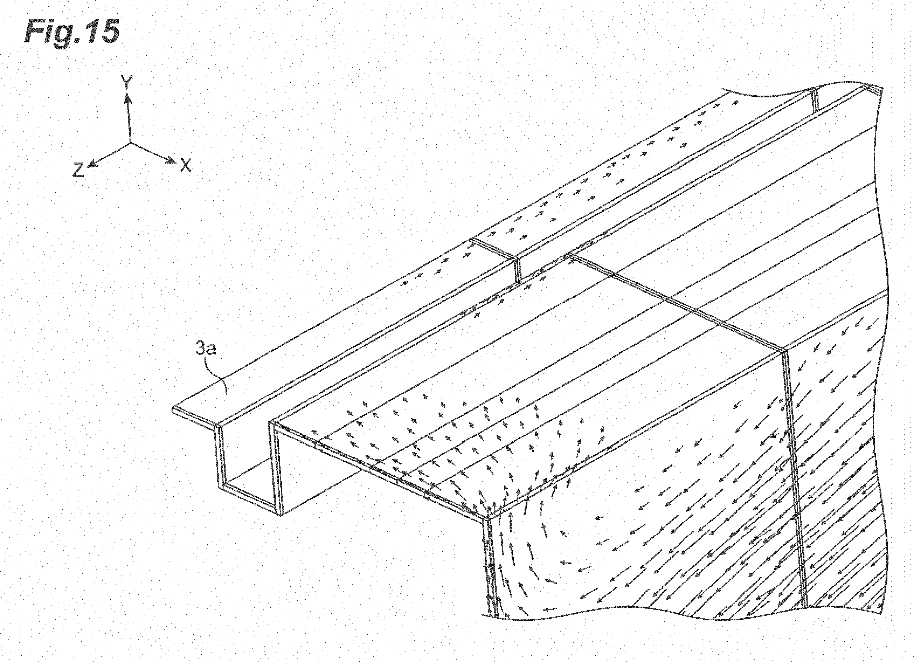

FIG. 15 is a partial perspective view of the covers illustrating flows of electric currents.

The covers act as a model (A). In the case of a structure of the model (A), an eddy current loss is highest, and a fluctuation range of the eddy current loss is also great. In FIGS. 15 to 19, directions in which an electric current flows are denoted by small arrows. It is illustrated in FIG. 15 that the aforementioned plurality of covers 3a is integrally formed and, in short, the covers are not divided. In this case, many induced currents (eddy currents) flows on top surfaces (YZ planes) of the covers.

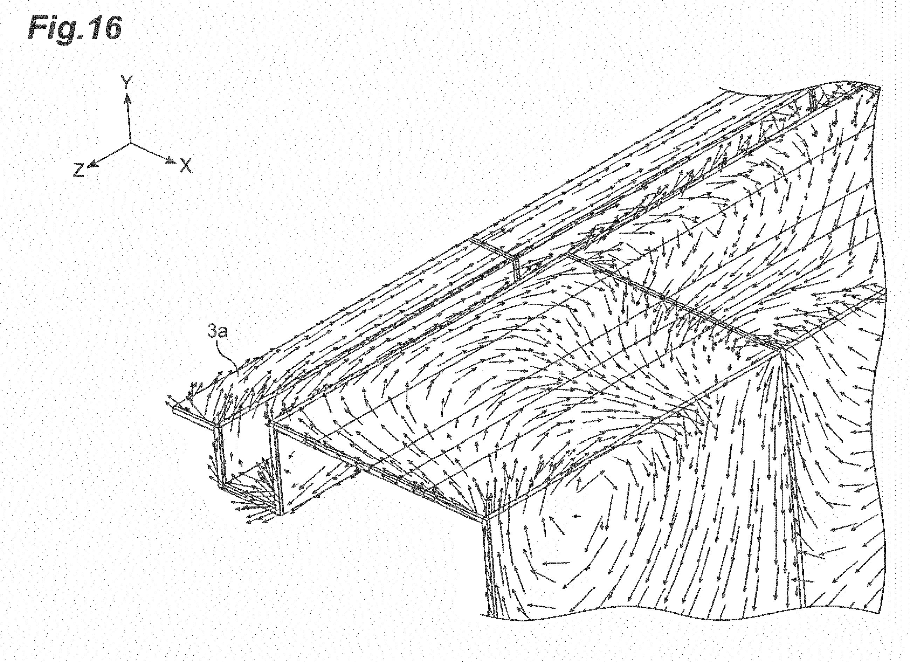

FIG. 16 is a partial perspective view of the covers illustrating flows of electric currents.

The covers act as a model (B). In comparison with the covers of FIG. 15, the covers of FIG. 16 are configured such that only top surfaces (YZ planes) of the neighboring covers 3a are separated by 1 mm. Lateral surfaces (XZ planes) are not divided. Due to this separation, eddy currents do not flow across the top surfaces of the neighboring covers 3a, but the eddy currents still flow on the lateral surfaces.

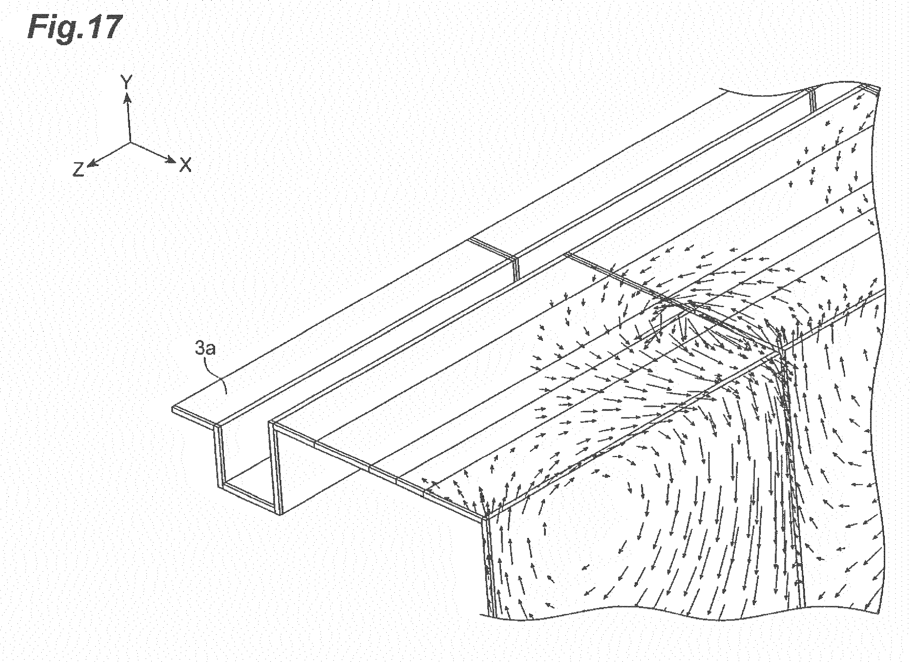

FIG. 17 is a partial perspective view of the covers illustrating flows of electric currents.

The covers act as a model (C). In comparison with the covers of FIG. 16, the covers of FIG. 17 are configured such that parts of lateral surfaces (XZ planes) of the neighboring covers 3a (from the top of the lateral part 3a2 to the vicinity of the middle in FIG. 3) are separated by 1 mm. Of course, eddy currents do not flow across the separated portion.

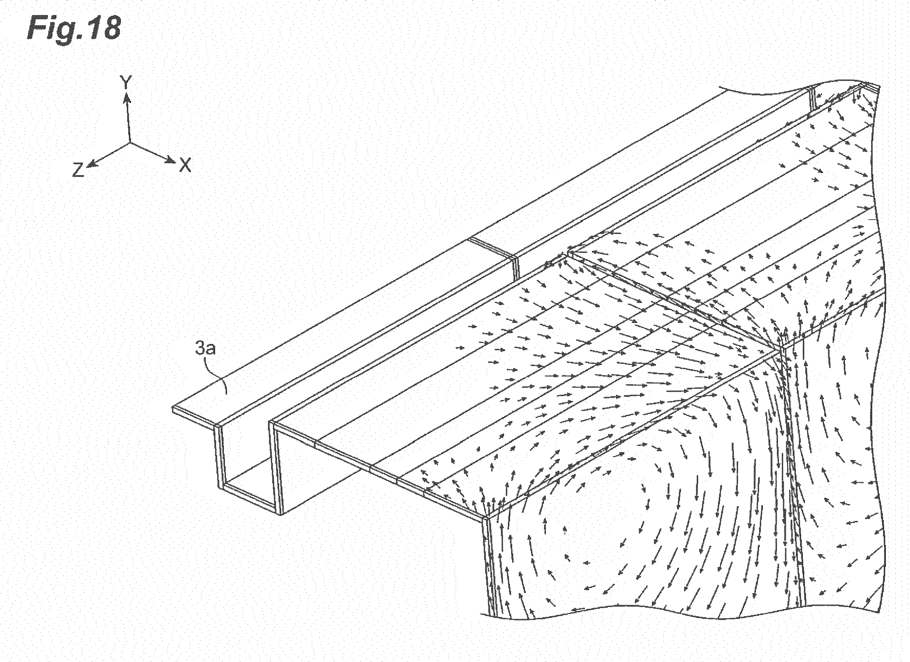

FIG. 18 is a partial perspective view of the covers illustrating flows of electric currents.

The covers act as a model (D). In comparison with the covers of FIG 17, the covers of FIG. 18 are configured such that parts of lateral surfaces (XZ planes) of the neighboring covers 3a (from the top to the bottom of the lateral part 3a2 in FIG. 3) are separated by 1 mm. Of course, eddy currents do not flow across the separated portion.

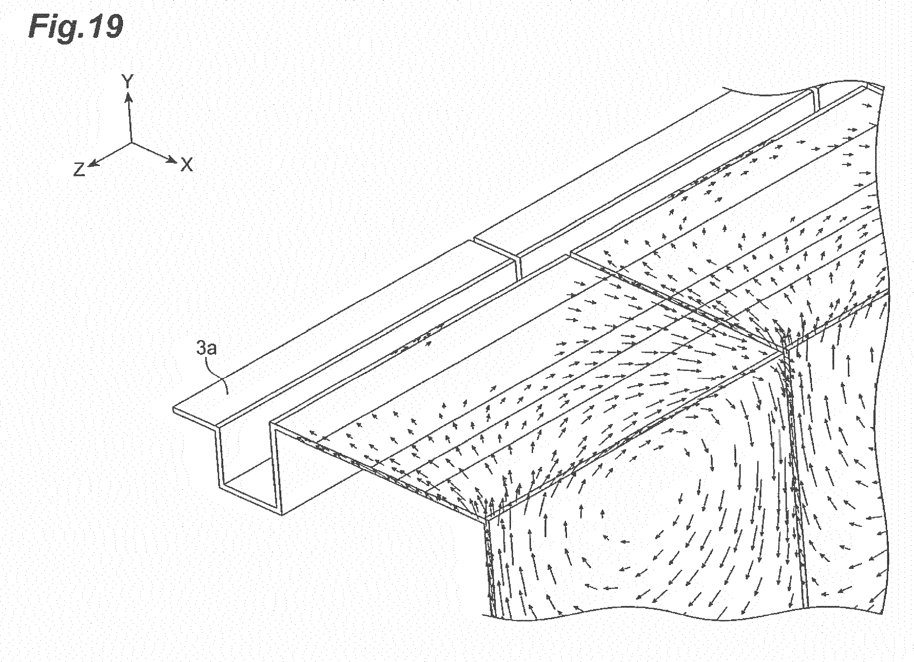

FIG. 19 is a partial perspective view of the covers illustrating flows of electric currents.

The covers act as a model (E). In comparison with the covers of FIG. 18, the covers of FIG. 19 are configured such that whole lateral surfaces (XZ planes) of the neighboring covers 3a (the lateral parts 3a2 and the bent parts 3a3 to 3a6 in FIG 3) are separated by 1 mm. Of course, eddy currents do not flow across the separated portion.

Table 1 is a table that indicates a loss [W] and a rate [%] of the eddy current. This table represents data obtained when the covers of the models (A) to (E) were used.

**[Table 1]**

| | (A) | (B) | (C) | (D) | (E) |
|---|---|---|---|---|---|
| Loss [W] | 119.5 | 37.8 | 36.1 | 35.1 | 33.7 |
| Rate [%] | 100.0 | 31.6 | 30.2 | 29.4 | 28.2 |

The loss of the model (A) was 119.5 W. In this case, the rate was 100%. When the losses of the models (B) to (E) were normalized, the rates thereof were 31.6%, 30.2%, 29.4%, and 28.2%, respectively.

## Claims

1. A magnet structure comprising:
a plurality of permanent magnets (2) fixed onto a baseplate (1) and extending in longitudinal direction; and
a cover structure (3) configured to cover the plurality of permanent magnets (2),
wherein the cover structure (3) includes a plurality of covers (3a) that is formed of a non-magnetic material and covers the plurality of permanent magnets (2),
the plurality of covers (3a) are provided along the longitudinal direction of the baseplate (1),
a relative position between the plurality of covers (3a) is fixed, there is a gap (G) between the neighboring covers, **characterized in that** the number of covers (3a) is smaller than the number of the permanent magnets (2).

2. The magnet structure according to claim 1, wherein there is a second gap (G2) between the permanent magnets.

3. The magnet structure according to claim 1 or 2, wherein the baseplate (1) is a magnetic material.

4. The magnet structure according to any one of claims 1 to 3, wherein surfaces of the permanent magnets (2) are covered with a resin.

5. The magnet structure according to any one of claims 1 to 4, wherein:
lateral surfaces of the baseplate (1) have grooves extending in longitudinal directions thereof; and
each of the covers (3a) includes bent parts fitted into the grooves.

6. The magnet structure according to any one of claims 1 to 5, wherein holes for inserting fixing components for fixing the covers (3a) are not provided in lateral surfaces of the baseplate (1).

7. The magnet structure according to any one of claims 1 to 6, wherein lateral surfaces of the covers (3a) have protrusions that protrude in a longitudinal direction of the baseplate (1).

8. The magnet structure according to claim 5, wherein lateral surfaces of the grooves of the baseplate (1) which are close to the permanent magnet (2) are inclined with respect to a surface of the baseplate (1) to which the permanent magnets (2) are fixed.

9. A motor having a plurality of the magnet structures (MS) defined in any one of claims 1 to 8, wherein the plurality of magnet structures is disposed along a surface of a rotor (C), the motor includes coils (10) that are disposed within a range of a magnetic field of the plurality of magnet structures (MS), and polarities of surfaces of the magnet structures (MS) are alternately inverted in a circumferential direction of the surface of the rotor (C).

10. A motor according to claim 9 having a plurality of the magnet structures (MS) as defined in claim 5,
wherein the bent parts of the covers (3a) are fitted into the grooves to fix the covers (3a) to the baseplate (1), and
wherein the grooves serve to connect the baseplates (1) of the magnet structures (MS) to the surface of the rotor (C).

## Patentansprüche

1. Magnetstruktur, umfassend:
eine Vielzahl von Permanentmagneten (2), die auf einer Basisplatte (1) befestigt sind und sich in einer Längsrichtung erstrecken; und
eine Abdeckstruktur (3), die so ausgelegt ist, dass sie die Vielzahl von Permanentmagneten (2) abdeckt,
wobei die Abdeckstruktur (3) eine Vielzahl von Abdeckungen (3a) beinhaltet, die aus einem nicht-magnetischen Material gebildet ist und die Vielzahl von Permanentmagneten (2) abdeckt,
die Vielzahl von Abdeckungen (3a) entlang der Längsrichtung der Basisplatte (1) vorgesehen sind,
eine relative Position zwischen der Vielzahl von Abdeckungen (3a) festgelegt ist,
ein Spalt (G) zwischen den benachbarten Abdeckungen vorhanden ist,
**dadurch gekennzeichnet, dass**
die Anzahl der Abdeckungen (3a) kleiner ist als die Anzahl der Permanentmagnete (2).

2. Magnetstruktur nach Anspruch 1, wobei zwischen den Permanentmagneten ein zweiter Spalt (G2) vorhanden ist.

3. Magnetstruktur nach Anspruch 1 oder 2, wobei die Basisplatte (1) aus einem magnetischen Material besteht.

4. Magnetstruktur nach einem der Ansprüche 1 bis 3, wobei die Oberflächen der Permanentmagnete (2) mit einem Harz überzogen sind.

5. Magnetstruktur nach einem der Ansprüche 1 bis 4, wobei:
Seitenflächen der Basisplatte (1) Nuten aufweisen, die sich in deren Längsrichtung erstrecken; und jede der Abdeckungen (3a) gebogene Teile beinhaltet, die in Nuten eingepasst sind.

6. Magnetstruktur nach einem der Ansprüche 1 bis 5, wobei Löcher zum Einsetzen von Befestigungskomponenten zum Befestigen der Abdeckungen (3a) nicht in Seitenflächen der Basisplatte (1) vorgesehen sind.

7. Magnetstruktur nach einem der Ansprüche 1 bis 6, wobei Seitenflächen der Abdeckungen (3a) Vorsprünge aufweisen, die in einer Längsrichtung der Basisplatte (1) vorstehen.

8. Magnetstruktur nach Anspruch 5, wobei Seitenflächen der Nuten der Basisplatte (1), die sich in der Nähe des Permanentmagneten (2) befinden, in Bezug auf eine Oberfläche der Basisplatte (1), an der die Permanentmagnete (2) befestigt sind, geneigt sind.

9. Motor mit einer Vielzahl der in einem der Ansprüche 1 bis 8 definierten Magnetstrukturen (MS), wobei die Vielzahl von Magnetstrukturen entlang einer Oberfläche eines Rotors (C) angeordnet ist, der Motor Spulen (10) enthält, die innerhalb eines Bereichs eines Magnetfelds der Vielzahl von Magnetstrukturen (MS) angeordnet sind, und Polaritäten von Oberflächen der Magnetstrukturen (MS) in einer Umfangsrichtung der Oberfläche des Rotors (C) abwechselnd invertiert sind.

10. Motor nach Anspruch 9, der eine Vielzahl der in Anspruch 5 definierten Magnetstrukturen (MS) aufweist,
wobei die gebogenen Teile der Abdeckungen (3a) in die Nuten eingepasst werden, um die Abdeckungen (3a) an der Basisplatte (1) zu befestigen, und
wobei die Nuten dazu dienen, die Basisplatten (1) der Magnetstrukturen (MS) mit der Oberfläche des Rotors (C) zu verbinden.

## Revendications

1. Structure d'aimant comprenant :
une pluralité d'aimants permanents (2) fixés sur une embase (1) et s'étendant dans la direction longitudinale, et
une structure de recouvrement (3) configurée pour recouvrir la pluralité d'aimants permanents (2),
dans laquelle la structure de recouvrement (3) inclut une pluralité de couvercles (3a) qui sont formés d'un matériau non magnétique et recouvrent la pluralité d'aimants permanents (2),
les différents couvercles (3a) sont disposés le long de la direction longitudinale de l'embase (1),
la position relative entre la pluralité de couvercles (3a) est fixée,
il existe un intervalle (G) entre les couvercles voisins, **caractérisée en ce que** le nombre de couvercles (3a) est inférieur au nombre d'aimants permanents (2).

2. Structure d'aimant selon la revendication 1, dans laquelle il existe un second intervalle (G2) entre les aimants permanents.

3. Structure d'aimant selon la revendication 1 ou la revendication 2, dans laquelle l'embase (1) est un matériau magnétique.

4. Structure d'aimant selon l'une quelconque des revendications 1 à 3, dans laquelle les surfaces des aimants permanents sont recouvertes d'une résine.

5. Structure d'aimant selon l'une quelconque des revendications 1 à 4, dans laquelle :
les surfaces latérales de l'embase (1) comportent des rainures s'étendant dans la direction longitudinale de celle-ci, et
chacun des couvercles (3a) inclut des pièces cintrées ajustées dans les rainures.

6. Structure d'aimant selon l'une quelconque des revendications 1 à 5, dans laquelle des alésages destinés à l'insertion de composants permettant de fixer les couvercles (3a) ne sont pas prévus dans les surfaces latérales de l'embase (1).

7. Structure d'aimant selon l'une quelconque des revendications 1 à 6, dans laquelle les surfaces latérales des couvercles (3a) comportent des protubérances qui font saillie dans la direction longitudinale de l'embase (1).

8. Structure d'aimant selon la revendication 5, dans lequel les surfaces latérales des rainures de l'embase (1) qui sont proches de l'aimant permanent (2) sont inclinées par rapport à la surface de l'embase (1) sur laquelle sont fixés les aimants permanents (2).

9. Moteur comportant une pluralité de structures d'aimant (MS) définies dans l'une quelconque des revendications 1 à 8, dans lequel la pluralité de structures d'aimant est disposée le long de la surface d'un rotor (C), le moteur inclut des bobines (10) qui sont disposées dans une plage de champ magnétique de la pluralité de structures d'aimant (MS), et les polarités des surfaces des structures d'aimant (MS) sont inversées alternativement dans la direction circonférentielle de la surface du rotor (C).

10. Moteur selon la revendication 9, comportant une pluralité de structures d'aimant (MS) telles que définies dans la revendication 5,
dans lequel les parties cintrées des couvercles (3a) sont ajustées dans les rainures afin de fixer les couvercles (3a) sur l'embase (1), et
dans lequel les rainures servent à relier les embases (1) des structures d'aimant (MS) à la surface du rotor (C).
